(19) Europäisches Patentamt
European Patent Office
Office européen des brevets

(11) EP 2 479 542 B1

(12) **EUROPEAN PATENT SPECIFICATION**

(45) Date of publication and mention
of the grant of the patent:
**25.12.2013 Bulletin 2013/52**

(51) Int Cl.:
***G01F 15/075*** *(2006.01)*

(21) Application number: **11151675.3**

(22) Date of filing: **21.01.2011**

(54) **Gas volume converter**

Gasvolumenumwandler

Convertisseur de volume de gaz

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.07.2012 Bulletin 2012/30**

(73) Proprietor: **Itron GmbH**
**76185 Karlsruhe (DE)**

(72) Inventors:
• **Gremm, Oliver**
**75056 Sulzfeld (DE)**

• **Zenner, Thorsten**
**76316 Malsch (DE)**

(74) Representative: **Howson, Richard G.B. et al**
**Kilburn & Strode LLP**
**20 Red Lion Street**
**London WC1R 4PJ (GB)**

(56) References cited:
**EP-A2- 1 858 144**    **US-A- 5 659 300**
**US-A1- 2002 083 778**    **US-B2- 6 886 414**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to an electronic gas volume converter dedicated to commercial or industrial applications.

Such converters are used to convert the actual volume measured by a gas volume measuring unit to reference conditions, namely the temperature and pressure conditions. Gas volume measuring unit can be part of a gas meter to the output of which the gas converter is linked or can be directly integrated within the converter. In any case, the measuring unit through which a gas volume flows drives mechanical means which are linked to the metrology part of the converter. The motion of the mechanical means, which is typically a rotational motion of an output axis of the measuring unit for diaphragm gas meters, causes the metrology part to generate at least one electrical pulse per turn. Each pulse represents a unit volume of gas. The pulses are counted in order to give at the end a cumulated volume. For conversion, depending on the type of converter, a temperature sensor is needed in any case. Some known converters also comprise a pressure sensor. A calculation unit of the converter can then deliver a converted value using the cumulated volume, the temperature measured by the temperature sensor, and the pressure measured by the pressure sensor when existing.

Hence, known converters carry on calculation in several steps: first, electrical pulses need to be generated, usually by using optical sensors, then, the number of electrical pulses is counted to provide a cumulated volume. At last, the cumulated value is converted to reference conditions using at least temperature measurements, and in some case, pressure measurements provided by suitable sensors.

In order to be able to carry out the above steps, components of known converters such as the pulse generator, the temperature and pressure sensors and the microcontroller which performs the counting and the conversion are generally powered by battery or mains with ATEX approval. In the latter case, development of such mains is costly. On the other hand, when battery is used, it is necessary to change the battery from time to time, which is not always easy since gas meters and converters are often located in hardly accessible places. In addition, it is not possible to know exactly when a battery should be replaced. Hence, there is a risk that some pulses will not be generated within the period during which the battery is not working any more, thus leading to a counted value which does not match with the consumed one.

EP 1 858 144 A2 discloses an intelligent power module with redundant and electrically independent battery strings to supply regulated voltage to electronic fluid flow measurement data processing circuitry. In a preferred implementation, the intelligent power module transmits operating power and battery status information over a two wire interface. Circuitry may encode information about the status of individual battery strings in a DC supply voltage. The fluid meter processing circuitry operates from the DC supply voltage and decodes the battery status information. Preferred embodiments may also include a switched-mode power supply capable of extracting substantially all available stored energy capacity from each of the battery strings, each of which is electrically isolated by a unidirectional current circuit.

US 2002/0083778 A1 discloses a self-powered fluid meter. The kinetic energy of a fluid being measured is used to provide power for circuitry that may perform functions related to the fluid measurement.

US 5,659,300 discloses a meter for mounting in a flow-sensing relationship to a pipeline conductor or electrical line having a commodity such as water, natural gas or electricity flowing through it. In one embodiment, the meter has a transceiver inductively-coupled to a remote signal-radiating device such as a repeater antenna for sending an encoded signal to a remote receiver. Another embodiment of the meter includes a rechargeable device such as a nickel-cadmium battery for storing meter-powering electricity and a charging generator coupled to such a device. The generator has a turbine driven "bootstrap fashion" by the commodity flowing through the conductor. Preferably, solid state digital technology is used for minimizing power consumption during meter operation.

There is thus a need to provide solutions for gas converters which could avoid the need of a separate power supply such as a battery of mains for counting.

It would also be interesting to have a gas volume converter which could directly deliver a converted value, without the need to first estimate the non-converted value through the use of a pulse generator which would also need to be energy powered.

In accordance with the present invention, there is provided a gas volume converter according to claim 1.

To this end, a feature of the present invention is a gas volume converter comprising at least a temperature sensor and a calculation unit for delivering a value of cumulated gas volume converted to a reference temperature condition, characterized in that it further comprises:

- Pulses generating means for delivering, without requiring electrical power, electrical pulses upon motion of a gas meter output element, each electrical pulse being representative of a unit volume of gas flowing through the gas meter;
- Power storage means for storing voltage of said electrical pulses,

and in that said temperature sensor and said calculation unit are powered by the stored voltage delivered by said power storage means to perform respectively a measurement of the temperature and a calculation of said value from counting of the number of electrical pulses generated by said pulses generating means and from temperature measured by said temperature sensor.

Thanks to this feature, no power supplier such as battery or mains is needed since the pulses generated through mechanical movements of elements actuated by the gas flow provide enough energy which is stored for powering components of the converter. In addition, converter provides advantageously a counter value which is already temperature converted. In other words, according to the invention, pulses are delivered by the pulses generating means by the sole mechanical energy of the meter, without the need of any electrical power, and are used for both counting the consumed volume and supplying power to components needed for performing the counting and the conversion to the reference temperature condition.

According to additional optional features of the invention, taken alone or in combination:

- The gas volume converter further comprises a non volatile memory for storing the value of cumulated converted gas volume value delivered by said calculation unit;
- The pulses generating means comprise an inductive coil coupled to a magnet which is mechanically driven by the motion of said gas meter output element, for instance a Wiegand coil, the magnet being then arranged so as to turn around said Wiegand coil when driven by the motion of the gas meter output element;
- The gas volume converter further comprises a position detection sensor for sensing the direction of the magnet. The position detection sensor can be a Hall or GMR sensor, said position detection sensor being also powered by the stored voltage delivered by said power storage means. Alternatively, the position detection sensor can be a second Wiegand coil sensor;
- The gas volume converter further comprises a pressure sensor also powered by the stored voltage delivered by said power storage means, and the calculation unit delivers a value of cumulated gas volume converted to both a reference temperature and a reference pressure conditions.
- The gas volume converter may be integrated within the gas meter.

These and other features of the invention will now be more fully disclosed with reference to the accompanying drawings, in which:

- Figure 1 schematically illustrates a synoptic view of an electronic gas converter according to a preferred embodiment;
- Figure 2 is a partial perspective view showing a possible integration of an electronic gas converter according to the invention within a gas meter's housing.

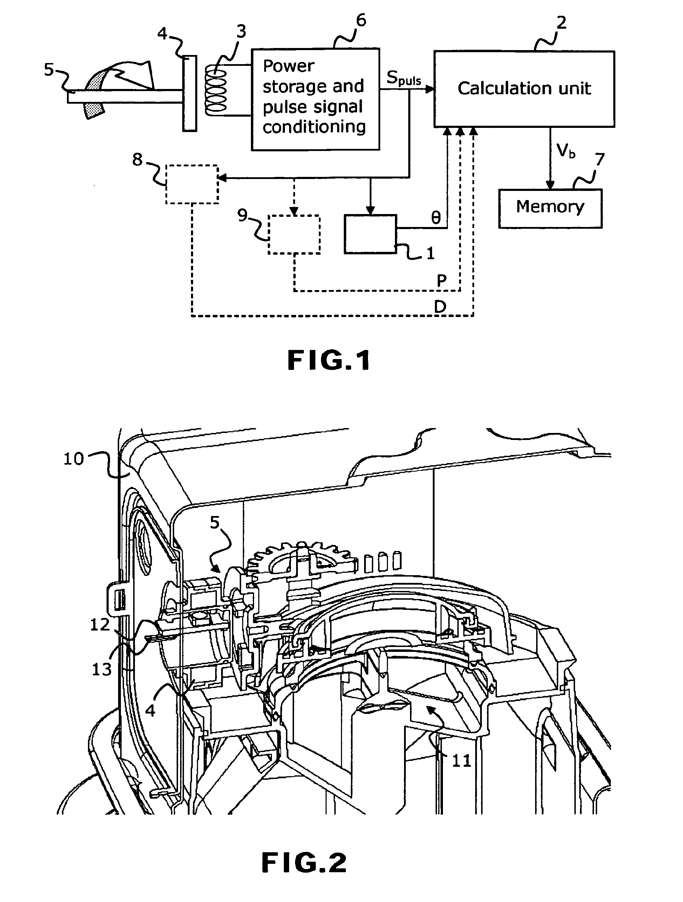

According to an embodiment of the invention schematically illustrated in figure 1, a gas volume converter comprises at least a temperature sensor 1 and a calculation unit 2 including a microcontroller, used for delivering a value $V_b$ of cumulated gas volume converted to a reference temperature condition.

The converter further comprises pulses generating means comprising preferably an inductive coil 3 arranged so as to be magnetically coupled to a magnet 4 which is mechanically driven by the motion of a gas meter output element 5, e.g. a turning bar-shaped permanent magnet firmly fixed to an end of an output rotating shaft of a diaphragm gas meter. A complete rotation of output element or shaft 5 is performed upon the flow of a predetermined amount of gas through the meter, corresponding to a unit volume of consumed gas.

In a preferred embodiment, inductive coil 3 is a Wiegand coil and magnet 4 is arranged so as to turn around said Wiegand coil driven by the motion of gas meter output element 5.

As the output shaft 5 with magnet 4 rotates under the gas flow, magnet 4 applies a magnetic flux, the polarity of which reverses within one complete rotation of the shaft. This causes inductive coil 3 to produce a voltage peak or electrical pulse $S_{puls}$ for each turn of the shaft, each electrical pulse being thus representative of a unit volume of consumed gas.

Electrical pulses $S_{puls}$ generated by coil 3 are delivered to a pulse signal conditioning circuit 6 comprising power storage means, such as a capacitor (not shown), for storing the voltage peak of each generated pulse.

The stored voltage is then used to power both temperature sensor 1 and calculation unit 2 so that they can perform respectively a measurement of the temperature $\theta$ and the direct calculation of a converted gas volume value $V_b$. Said calculation involves the counting of the number of pulses generated by the pulses generated means, incremented in a corresponding counter (not shown) of calculation unit 2, and the value $\theta$ of the measured operating temperature.

Concretely, at each generation of pulses, temperature measurement is triggered and volume counting operation, i.e. increment of the counter, is performed by adding to the counter a value which corresponds to the number of unit volumes of gas corrected by a compensating factor which depends on the measured temperature, according to the formula:

$$V_b = (\theta_b \, / \, \theta) * V$$

where:

$V_b$ is the converted volume
$V$ is the unconverted measured volume
$\theta_b$ is the reference temperature
$\theta$ is the measured temperature

Hence, calculation unit 2 delivers directly a converted value which takes into account the operating temperature.

Converter also comprises a non volatile memory 7 which stores the value $V_b$ in output of calculation unit 2.

Optionally, as shown in dotted lines in figure 1, the converter may advantageously comprise a position detection sensor 8, such as a Hall or GMR sensor, or even a second Wiegand coil sensor, which senses the direction D of magnet 4. It is thus possible to increment, depending on the direction of rotation of the magnet, two volume registers of the counter in the calculation unit, one corresponding to the forward gas flow volume, and the other corresponding to the backward gas flow. As for the other components of the converter, said position detection sensor 8 is also powered when needed by the voltage stored within power storage means 6, except for the case where the position detection sensor is also a Wiegand coil sensor, which does not need any operating electrical power.

The converter according to a possible embodiment of the invention may also comprise a pressure sensor 9 for measuring operating pressure condition P. As for the temperature sensor, said pressure sensor is also powered by the stored voltage delivered by power storage means. In this embodiment, the calculation unit can thus deliver a value of cumulated gas volume converted to both a reference temperature and a reference pressure conditions.

Although the above description has been made for a converter in which the pulses generating means comprises a Wiegand coil coupled with a magnet, other components could also be used, such as any moving magnet which can induce voltage in a coil or a piezo element which can be moved by the output shaft and deliver a pulse representative of a unit volume of gas accordingly.

In any case, the voltage peak generated by pulse generating means and stored in power storage means is sufficient to power up the components of the converters such as the calculation unit with its microcontroller, the non volatile memory and the different sensors sensor for approximately 100 milliseconds. In addition, each voltage peak both reloads the power storage means and generates an event which trigger the calculation unit for obtaining the temperature and pressure measurement, the magnet position and carrying on the calculation. In case there is still some energy left, it can be used for supplying other components.

A possible implementation of an electronic gas converter according to the invention is shown in figure 2, wherein the converter is directly integrated within the housing 10 of a gas meter. Said gas meter comprises classically a measuring unit, schematically referred by 11 in figure 2, e.g. two adjacent measuring chambers separated by one deformable membrane (not shown). The gas whose volume is to be measured is injected into and evacuated from the measuring chambers and causes the membrane to move back and forth. The motion of the membrane is transmitted by a chain of mechanical elements, including the output shaft element 5 disclosed above. Magnet 4 is thus driven in rotation, each turn corresponding to a unit volume of gas at the operating temperature condition. A PCB 12 supporting the components (not shown) of the converter, namely the coil, the position detection sensor and the pressure sensor if any, the calculation unit, the power storage means and the memory, extends parallel to the direction of the output shaft and arranged so that magnet 4 can turn around the coil. PCB 1 is also provided with interface connector to a main external PCB (not shown). Converted value stored in the memory can thus be picked up when needed via communication from the main external PCB controller. For communication, the components of the main external PCB can be powered from external supply.

Other implementations are possible without departing from the scope of the invention. For instance, the magnet coupled to the coil could be located externally to the meter's housing, in a specific housing dedicated to the converter. Alternatively, only the magnet with the coil could be located within the meter's housing, while the remaining parts of the converter would be in a separate dedicated housing electrically connected to the coil.

Whatever the implementation used, the invention takes benefit of the moving parts of a gas meter to generate pulses and enough energy to power at least a volume counter and a temperature sensor for gas volume conversion. The converter of the invention does not need to be powered by an external power supply such as a battery and mains, and provides a counter value which is already temperature (and in some cases pressure) converted.

**Claims**

1. Gas volume converter comprising at least a temperature sensor (1) and a calculation unit (2) for delivering a value ($V_b$) of cumulated gas volume converted to a reference temperature condition, said gas volume converter further comprising:

   - Pulses generating means (3, 4) for delivering, without requiring electrical power, electrical pulses ($S_{puls}$) upon motion of a gas meter output element (5), each electrical pulse being representative of a unit volume of gas flowing through the gas meter;
   - Power storage means (6) for storing voltage of said electrical pulses, **characterized in that** said power storage means (6) are adapted to store the voltage peak of each generated pulse, the stored voltage being used to power both temperature sensor (1) and calculation unit (2) so that they can perform respectively a measurement ($\theta$) of the temperature and a direct calculation of a converted gas volume value ($V_b$), each electrical pulse generated by said pulses generating means (3, 4) causing increment of a counter by adding to the counter a value compensated by a compensating factor which depends on the measured temperature, such that said calculation unit can directly deliver a converted value.

2. Gas volume converter according to claim 1, **characterized in that** it further comprises a non volatile memory (7) for storing the value ($V_b$) of cumulated converted gas volume value delivered by said calculation unit (2).

3. Gas volume converter according to anyone of the preceding claims, **characterized in that** said pulses generating means (3, 4) comprise an inductive coil (3) coupled to a magnet (4) which is mechanically driven by the motion of said gas meter output element (5).

4. Gas volume converter according to claim 3, **characterized in that** said inductive coil (3) is a Wiegand coil and **in that** the magnet (4) is arranged so as to turn around said Wiegand coil when driven by the motion of the gas meter output element (5).

5. Gas volume converter according to anyone of claims 3 to 4, **characterized in that** it further comprises a position detection sensor (8) for sensing the direction of the magnet (4).

6. Gas volume converter according to claim 5, **characterized in that** said position detection sensor (8) is a Hall or GMR sensor, said position detection sensor (8) being also powered by the stored voltage delivered by said power storage means (6).

7. Gas volume converter according to claim 5, **characterized in that** said position detection sensor (8) is a second Wiegand coil sensor.

8. Gas volume converter according to anyone of the preceding claims, **characterized in that** it further comprises a pressure sensor (9) also powered by the stored voltage delivered by said power storage means (6), and **in that** said calculation unit (2) delivers a value ($V_b$) of cumulated gas volume converted to both a reference temperature and a reference pressure conditions.

9. Gas volume converter according to anyone of the preceding claims, **characterized in that** it is integrated within the gas meter.

**Patentansprüche**

1. Gasvolumenumwandler, aufweisend mindestens einen Temperatursensor (1) und eine Recheneinheit (2) für das Ausgeben eines Werts ($V_b$) des kumulierten Gasvolumens, das auf eine Bezugstemperaturbedingung umgewandelt ist, wobei der Gasvolumenumwandler des Weiteren Folgendes aufweist:

   - Impulsgenerierungsmittel (3, 4) zum Ausgeben von elektrischen Impulsen ($S_{puls}$), ohne elektrische Energie zu benötigen, bei Bewegung eines Ausgangselements (5) eines Gasmessgeräts, wobei jeder elektrische Impuls für eine Gasvolumeneinheit eines durch das Gasmessgeräts strömenden Gases steht;
   - Energiespeichermittel (6) zum Speichern von Spannung der elektrischen Impulse,
   **dadurch gekennzeichnet, dass** die Energiespeichermittel (6) ausgelegt sind, den Spannungsspitzenwert jedes generierten Impulses zu speichern, wobei die gespeicherte Spannung verwendet wird, um den Temperatursensor (1) sowie die Recheneinheit (2) mit Energie zu versorgen, sodass diese eine Messung ($\theta$) der Temperatur bzw. eine direkte Berechnung eines Werts des umgewandelten Gasvolumens ($V_b$) durchführen können, wobei jeder von den Impulsgenerierungsmitteln (3, 4) generierte Impuls eine Erhöhung eines Zählers verursacht, indem dem Zähler ein durch einen von der gemessenen Temperatur abhängigen Kompensationsfaktor kompensierter Wert hinzugefügt wird, sodass die Berechnungseinheit direkt einen umgewerteten Wert ausgeben kann.

2. Gasvolumenumwandler nach Anspruch 1, **dadurch gekennzeichnet, dass** er des Weiteren einen nicht flüchtigen Speicher (7) aufweist, um den Wert ($V_b$) des Werts des kumulierten umgewandelten Gasvolumens, der von der Berechnungseinheit (2) ausgegeben wird, zu speichern.

3. Gasvolumenumwandler nach einem der vorhergehenden Ansprüche, **dadurch gekennzeichnet, dass** die Impulsgenerierungsmittel (3, 4) eine induktive Spule (3) umfassen, die an einen Magneten (4) gekoppelt ist, der mechanisch durch die Bewegung des Ausgangselements (5) des Gasmessgeräts angetrieben wird.

4. Gasvolumenumwandler nach Anspruch 3, **dadurch gekennzeichnet, dass** die induktive Spule (3) eine Wiegand-Spule ist, und dass der Magnet (4) derart angeordnet ist, dass er die Wiegand-Spule umkehrt, wenn er durch die Bewegung des Ausgangselements (5) des Gasmessgeräts angetrieben wird.

**5.** Gasvolumenumwandler nach einem der Ansprüche 3 bis 4, **dadurch gekennzeichnet, dass** er des Weiteren einen Positionsdetektionssensor (8) zum Erfassen der Richtung des Magneten (4) aufweist.

**6.** Gasvolumenumwandler nach Anspruch 5, **dadurch gekennzeichnet, dass** der Positionsdetektionssensor (8) ein Hall- oder GMR-Sensor ist, wobei der Positionsdetektionssensor (8) ebenfalls durch die von den Energiespeichermitteln (6) ausgegebene gespeicherte Spannung mit Energie versorgt wird.

**7.** Gasvolumenumwandler nach Anspruch 5, **dadurch gekennzeichnet, dass** der Positionsdetektionssensor (8) ein zweiter Wiegand-Spulen-Sensor ist.

**8.** Gasvolumenumwandler nach einem der vorhergehenden Ansprüche, **dadurch gekennzeichnet, dass** er des Weiteren einen Drucksensor (9) aufweist, der ebenfalls durch die von den Energiespeichermitteln (6) ausgegebene gespeicherte Spannung mit Energie versorgt wird, und dass die Berechnungseinheit (2) einen Wert ($V_b$) des kumulierten Gasvolumens ausgibt, der auf eine Bezugstemperatur- und eine Bezugsdruckbedingung umgewandelt ist.

**9.** Gasvolumenumwandler nach einem der vorhergehenden Ansprüche, **dadurch gekennzeichnet, dass** er in das Gasmessgerät integriert ist.

**Revendications**

**1.** Convertisseur de volume de gaz comprenant au moins un capteur de température (1) et une unité de calcul (2) pour fournir une valeur ($V_b$) de volume de gaz cumulé convertie en une condition de température de référence, ledit convertisseur de volume de gaz comprenant en outre :

    - des moyens de génération d'impulsions (3, 4) pour fournir, sans nécessiter d'énergie électrique, des impulsions électriques ($S_{puls}$) lors du mouvement d'un élément de sortie de compteur à gaz (5), chaque impulsion électrique étant représentative d'un volume unitaire de gaz s'écoulant à travers le compteur à gaz ;
    - des moyens de stockage d'énergie électrique (6) pour stocker une tension desdites impulsions électriques,
    **caractérisé en ce que** lesdits moyens de stockage d'énergie électrique (6) sont adaptés pour stocker la crête de tension de chaque impulsion générée, la tension stockée étant utilisée pour alimenter à la fois le capteur de température (1) et l'unité de calcul (2) pour qu'ils puissent réaliser respectivement une mesure ($\theta$) de la température et un calcul direct d'une valeur de volume de gaz convertie ($V_b$), chaque impulsion électrique générée par lesdits moyens de génération d'impulsions (3, 4) entraînant un incrément d'un compteur en ajoutant au compteur une valeur compensée par un facteur de compensation qui dépend de la température mesurée, de sorte que ladite unité de calcul puisse fournir directement une valeur convertie.

**2.** Convertisseur de volume de gaz selon la revendication 1, **caractérisé en ce qu'**il comprend en outre une mémoire non volatile (7) pour stocker la valeur ($V_b$) de valeur de volume de gaz cumulé convertie fournie par ladite unité de calcul (2).

**3.** Convertisseur de volume de gaz selon une quelconque des revendications précédentes, **caractérisé en ce que** lesdits moyens de génération d'impulsions (3, 4) comprennent une bobine d'induction (3) couplée à un aimant (4) qui est entraîné mécaniquement par le mouvement dudit élément de sortie de compteur à gaz (5).

**4.** Convertisseur de volume de gaz selon la revendication 3, **caractérisé en ce que** ladite bobine d'induction (3) est une bobine de Wiegand et **en ce que** l'aimant (4) est agencé afin de tourner autour de ladite bobine de Wiegand lorsqu'il est entraîné par le mouvement de l'élément de sortie de compteur à gaz (5).

**5.** Convertisseur de volume de gaz selon une quelconque des revendications 3 à 4, **caractérisé en ce qu'**il comprend en outre un capteur de détection de position (8) pour détecter la direction de l'aimant (4).

**6.** Convertisseur de volume de gaz selon la revendication 5, **caractérisé en ce que** ledit capteur de détection de position (8) est un capteur de Hall ou GMR, ledit capteur de détection de position (8) étant également alimenté par la tension stockée fournie par lesdits moyens de stockage d'énergie électrique (6).

**7.** Convertisseur de volume de gaz selon la revendication 5, **caractérisé en ce que** ledit capteur de détection de position (8) est un second capteur à bobine de Wiegand.

**8.** Convertisseur de volume de gaz selon une quelconque des revendications précédentes, **caractérisé en ce qu'**il comprend en outre un capteur de pression (9) également alimenté par la tension stockée fournie par lesdits moyens de stockage d'énergie électrique (6), et **en ce que** ladite unité de calcul (2) fournit une valeur ($V_b$) de volume de gaz cumulé convertie en deux conditions d'une température de référence et d'une pression de référence.

**9.** Convertisseur de volume de gaz selon une quelconque des revendications précédentes, **caractérisé en ce qu'**il est intégré à l'intérieur du compteur à gaz.

**FIG.1**

**FIG.2**

**EP 2 479 542 B1**

**REFERENCES CITED IN THE DESCRIPTION**

**Patent documents cited in the description**

- EP 1858144 A2
- US 20020083778 A1
- US 5659300 A